# EUROPEAN PATENT APPLICATION

(11) **EP 2 663 129 A1**
(43) Date of publication of application: **13.11.2013**
(21) Application number: 12167697.7
(22) Date of filing: 11.05.2012
(51) Int. Cl.: H04W 48/18, H04W 88/06

(54) **Selection procedure of wireless network**

(71) Applicant: Uros Oy, 90590 Oulu (FI)
(72) Inventor: Uhari, Tommi, 90590 Oulu (FI)
(74) Representative: Kolster Oy Ab

(57) **Abstract**

There is provided an apparatus configured to detect at least two wireless networks (102' to 106') available at the location of the apparatus (100), wherein each wireless network (102' to 106') is provided by a different access point (102 to 106); generate a test signal (400) to be transmitted to each access point (102 to 106), wherein the test signal (400) is arranged to cause the receiving access point (102 to 106) to apply a connection to a predetermined target (108, 410); cause a transmission of the test signal (400) to each access point (102 to 106) and reception of a response (402) from the corresponding access point (102 to 106); acquire information about the connections via the wireless networks (102' to 106') on the basis of the received responses (402); and select the wireless network (102' to 106') to connect to among the at least two wireless networks (102' to 106') on the basis of the acquired information and at least one predetermined criterion.

## Description

### Field

The invention relates generally to communication networks. More particularly, the invention relates to a selection procedure of a wireless network, such as a wireless local area network (WLAN).

### Background

It may often be the case that a device, which is capable to access to a network wirelessly, finds several different wireless networks. Each of the wireless networks may be provided by certain operator and may provide, for example, a WLAN at the location of the device. Currently, the user of the device may manually select the network he/she wishes to connect to. However, manual interaction may not be the quickest or the most reliable way of obtaining good connection to the target via one of the WLANs. Moreover, such manual selection is by no means user friendly. Therefore, a problem may occur as how to automatically select the most appropriate WLAN to connect to by the device.

### Brief description of the invention

According to an aspect of the invention, there is provided an apparatus as specified in claim 1.

According to an aspect of the invention, there is provided a method as specified in claim 14.

According to an aspect of the invention, there is provided a computer program product as specified in claim 15.

According to an aspect of the invention, there is provided a computer-readable distribution medium carrying the above-mentioned computer program product.

According to an aspect of the invention, there is provided an apparatus comprising processing means configured to cause the apparatus to perform any of the embodiments as described in the appended claims.

According to an aspect of the invention, there is provided an apparatus comprising a processing system configured to cause the apparatus to perform any of the embodiments as described in the appended claims.

According to an aspect of the invention, there is provided an apparatus comprising means for performing any of the embodiments as described in the appended claims.

Embodiments of the invention are defined in the dependent claims.

### List of drawings

In the following, the invention will be described in greater detail with reference to the embodiments and the accompanying drawings, in which
Figure 1 presents an example scenario, according to an embodiment;
Figure 2 shows available networks found in the scenario of Figure 1;
Figure 3 shows a method, according to an embodiment;
Figures 4A and 4B illustrate a transmission of a test signal and a reception of a response, according to some embodiments;
Figure 5 presents a flow diagram, according to an embodiment;
Figures 6 and 7 depict some possibilities to extract information related to connections, according to some embodiments;
Figures 8A, 8B, 9 and 10 illustrate some possibilities of selecting the suitable wireless networks, according to some embodiments;
Figures 11 and 12 illustrate apparatuses according to some embodiments.

### Description of embodiments

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

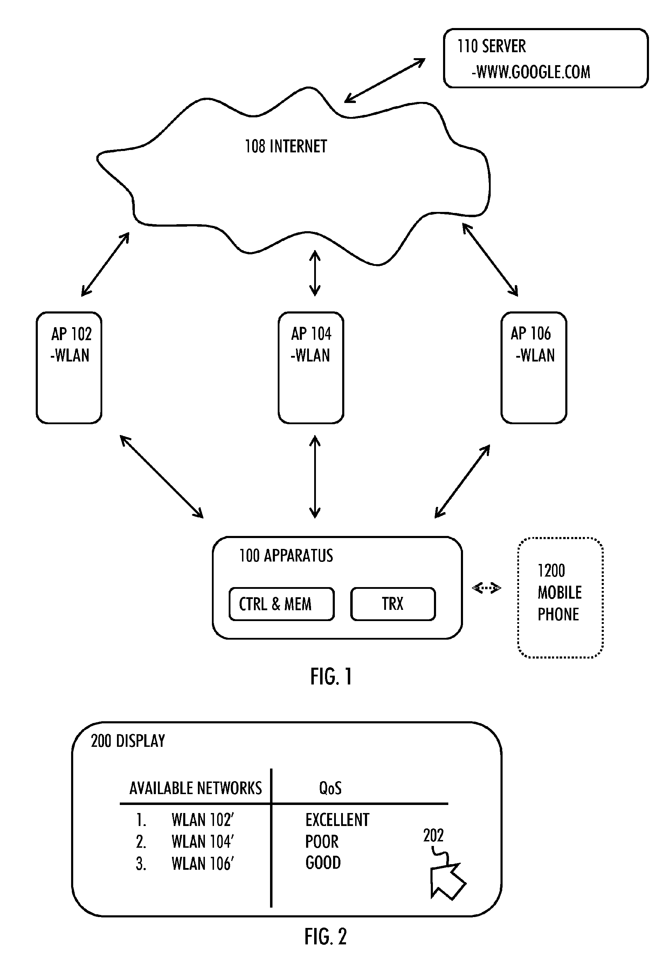

Nowadays end-user devices may connect to a wireless network, such as to a wireless local area network (WLAN), also commonly known as the Wi-FI. Other types of wireless network may include for example wireless personal area networks (WPAN). Both of these wireless networks typically have small coverage areas which make these networks location dependent. Therefore, the available networks in one location may be different than in another location. The end user device or apparatus 100 of Figure 1, which may be in a need of an Internet connection, may search for wireless networks in the location of the apparatus 100. Let us assume that the device 100 finds three different networks. The first WLAN is offered by an access point AP 102, the second WLAN is provided by an AP 104, and the coverage for the third WLAN is provided by an AP 106. The APs 102 to 106 may be internet access points, i.e. providing connection capability to the Internet 108, as shown in Figure 1, for example. As known, the Internet 108 may provide access to required servers 110, such as to the *www.google.com,* for example, or to any web page required. A browser, or alike functional entity, may communicate with a name server to translate the server name *"www.google.com"* into an internet protocol (IP) address, which is used to connect to the server machine. The device 100 may thus communicate to Internet service providers (ISP), which are indirectly represented in Figure 1 as the access points 102 to 106. The service providers themselves are not illustrated in Figure 1, but a service provider may be an independent supplier/vendor of the APs 102 to 106. Thus, via the APs 102 to 106, the device 100 may, at least theoretically, connect to the Internet 108.

Figure 2 illustrates a display 200, which may in some embodiments be part of the apparatus 100. The display 200 may show the found available networks 102' to 106' corresponding to the access points 102 to 106, respectively, at the current location. As a skilled person may be aware, the found networks 102' to 106' may be characterized by the quality of service (QoS), which may refer to the strength of the received signal from the corresponding APs 102 to 106. Figure 2 shows that a signal from the network 102' is very strong and, thus, capable of providing excellent QoS to/from the WLAN 102'. Similarly, it may be seen that the second WLAN 104' and the third WLAN 106' offer poor and good QoS, respectively. The relationship between the QoS and the strength of the signal may be predefined according to empirical derivation, for example.

It is also shown by the cursor 202 that the user may need to manually point the network to connect to on the basis of the given QoS information. Such manual selection may not be optimal and it may be based on only the QoS parameter. The apparatus 100 may perform automatic pre-selection by disregarding (and not showing) wireless network which provide signal strength below a predetermined threshold. However, even with such pre-selection, the user typically needs to select the network to connect to manually on the basis of a limited amount of information. As said, such manual selection is neither reliable nor user-friendly. Especially in cases where several wireless networks are available, where the available networks change frequently (due to movements of the carrier of the device, for example), and/or where the capacity of the available networks change often, the manual selection may cause problems. It should also be noted that the requirements for connecting to a first WLAN may vary from the requirements for connecting to a second WLAN. For example, the WLANs may vary regarding the expenses of data communication via the WLAN, and regarding the requirements of authentication. Moreover, different WLANs may vary in the throughput offered, e.g. how many bits of data per second may be transferred via the WLAN, or in the quality of service, for example.

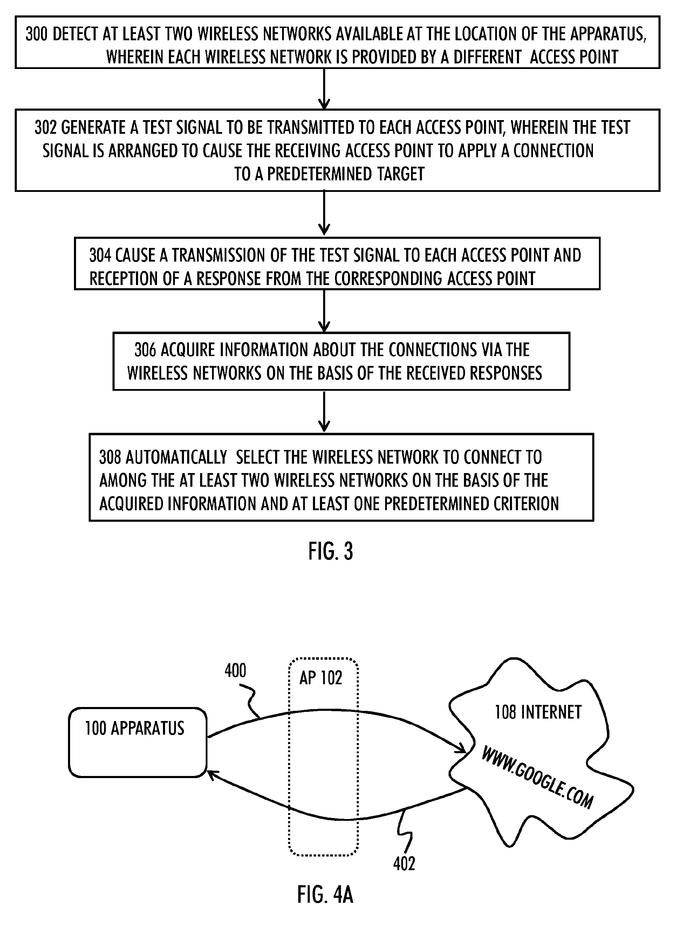

Therefore, it is proposed to perform an automatic selection procedure of a wireless network as shown in Figure 3. According to the proposal the apparatus 100, comprises at least one processor (CTRL) and at least one memory (MEM) including a computer program code, wherein the at least one memory (MEM) and the computer program code are configured, with the at least one processor (CTRL), to cause the apparatus 100, in step 300, to detect at least two wireless networks 102' to 106' available at the location of the apparatus 100, wherein each wireless network 102' to 106' is provided by a different AP 102 to 106, respectively. The detection of the networks 102' to 106' may take place by any means known to skilled person, such as active scanning (e.g. sending a probe request) or passive scanning. The detection may be based on the received signal strength from the wireless networks.

The device 100 may further be caused, in step 302, to generate a test signal to be transmitted to each AP, wherein the test signal is arranged to cause the receiving access point to apply a connection to a predetermined target. The test signal may be formed individually for each of the detected networks 102' to 106' or the test signal may be the same for every network 102' to 106'. However, it may be advantageous to apply the same test signal for all of the networks 102' to 106' in order to enable accurate and reliable comparison of the available networks 102' to 106', as will be explained later.

As said, the test signal may carry information according to which the receiving AP is to apply the connection to the predetermined target. The receiving AP may also be required to respond to the test signal so that the apparatus 100 obtains information related to the connections to the target via different APs 102 to 106, as will be described. The APs 102 to 106 may respond according to its protocol. In such case the test signal need not comprise any specific information to respond, but based on the format of the test signal, the receiving AP 102, 104, or 106 obtains knowledge that a response is due. The test signal may also carry information according to which the predetermined target is due to respond, in which case the target may respond to the corresponding AP 102, 104, or 106, which forwards or resends the response to the apparatus 100.

In an embodiment, the predetermined target is the Internet. This is shown in Figure 4A, wherein the apparatus 100 may generate the test signal 400 to comprise a request to connect to a predetermined server on the Internet, such as *"Connect to www.google.com".* The AP 102, for example, when receiving such signal from the end user device 100, may resend (or forward) the signal to the Internet 108 and more specifically to the server associated with the web page *"www.google.com".* The Internet 108 may return the web page of *"www.google.com"* to the end user device 100 via the AP 102. Thus, the AP 102 may respond by providing a response 402, which carries information representing the web page, to the end user device 100.

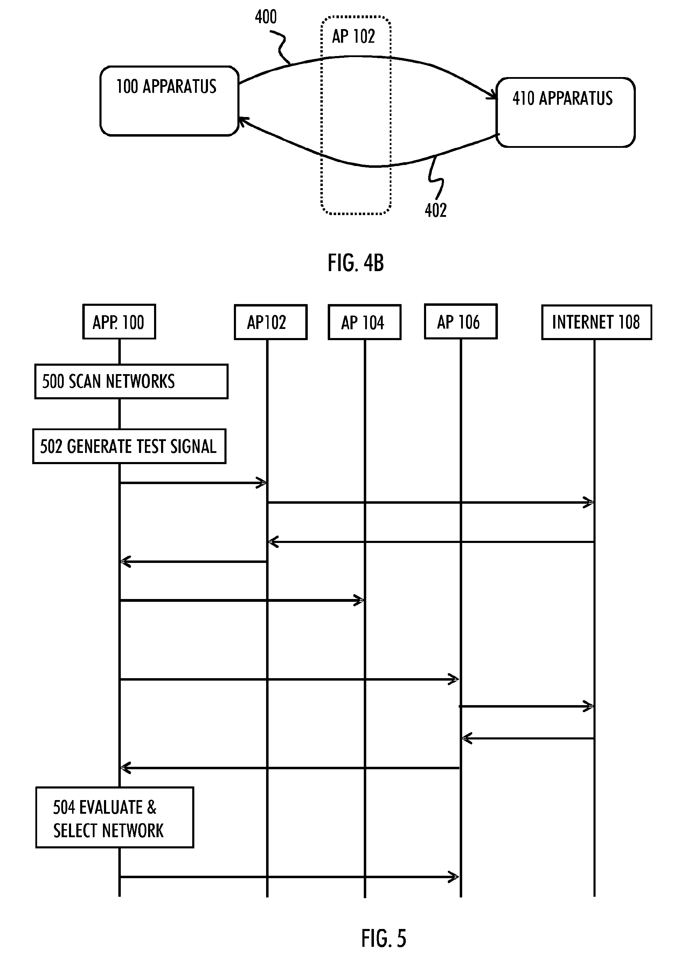

In an embodiment, the predetermined target is another device in the area of the first device 100, such as the mobile terminal 1200 shown with dotted lines in Figure 1. By area, it is meant that the second device may also locate in the coverage area of the same wireless network 102' to 106'. That is, the first device 100 and the second device may be in the need of communication with each other via the wireless network 102' to 106' without connecting to the Internet 108. This embodiment is shown in Figure 4B, wherein the test signal 400 requires the AP 102, for example, to connect to another device 410 in the area. The AP 102 may thus request connection to the second device 410 and, once successful, provide the response 402 to the device 100. The test signal may in this case require the second device 400 to transmit certain amount of data to the first device 100 via the network 102' corresponding to the AP 102. Thus, the response 402 may carry the required amount and type of data from the second device 410. In this embodiment, the devices 100 and 410 both connect to the wireless network and may share data among each other via the network 102', for example.

It should be noted that the predetermined target may be both the Internet 108 and the other device 410. This may be the case when the apparatus 100 is in the need to communicate with the Internet 108 and with the other device 410. It may even be that the second device 410 is in the need to access the internet 108 via the first device 100, wherein the connection between the devices 100 and 410 and the connection between the device 100 and the Internet 108, both, apply the wireless network 102' to 106' which is to be selected according to the proposed solution.

In step 304, the apparatus 100 is caused to cause a transmission of the test signal to each access point 102 to 106 and a reception of the response from the corresponding AP 102 to 106. Each network 102' to 106' may be tested in turn, i.e. consecutively one after another, as will be shown with respect to Figure 5. Alternatively, in an embodiment, the device 100 is equipped with several radio interface units so that the device 100 may simultaneously test several networks 102' to 106', e.g. send and receive data simultaneously from two different wireless networks.

As the device 100 may receive responses from each of the wireless networks (to which the test signal has been transmitted to), the device 100 may in step 306 acquire information about the connections via the wireless networks 102' to 106' on the basis of the received responses. Therefore, the device 100 may acquire at least one characteristic of each connection related to the corresponding networks 102' to 106'. Thereafter, in step 308, the device 100 may be caused to automatically select the wireless network to connect to among the at least two wireless networks 102' to 106' on the basis of the acquired information and at least one predetermined criterion. Automatic selection may be significantly more efficient and more user friendly than manual selection, especially in situations with high variation in the availability and/or capacity of the wireless networks. Steps 306 and 308 will be detailed later.

Figure 5 shows an embodiment of the network selection procedure in the form of a flow diagram. In this embodiment, it is assumed that the predetermined target is the Internet 108. The process starts by the apparatus 100 scanning the available networks in step 500. Thereafter, the apparatus 100 may generate the test signal in step 502. The test signal may be a simple "connect"-request to the Internet, for example. The test signal may also be a ping-request, for example. Thereafter, the apparatus 100 sends the test signal to AP 102, which forwards it to the Internet 108. The Internet 108 responds to the test signal by transmitting data to the AP 102 which forwards the data to the apparatus 100. The data in the response may be related to the requested web page or related to the ping-request (such as a ping-response). The same is performed for the other two access points 104 and 106. It may also happen that at least one of the access points, such as the access point 104, is not responding. It may be that the apparatus 100 has a timer during which a response is listened to. When the timer for the response has expired, the apparatus may determine that no response is acquired. This may be because of an abrupt connection failure to the AP 104, or for some other reason. In this case, the response from the AP 104 is not received, as shown in Figure 5. Once all of the available wireless networks have been tested, the apparatus may in step 504 evaluate and select the most appropriate network to connect to, for example. In the embodiment of Figure 5, the wireless network 106' provided by the AP 106 has been selected and connection to the third WLAN 106' is to be established.

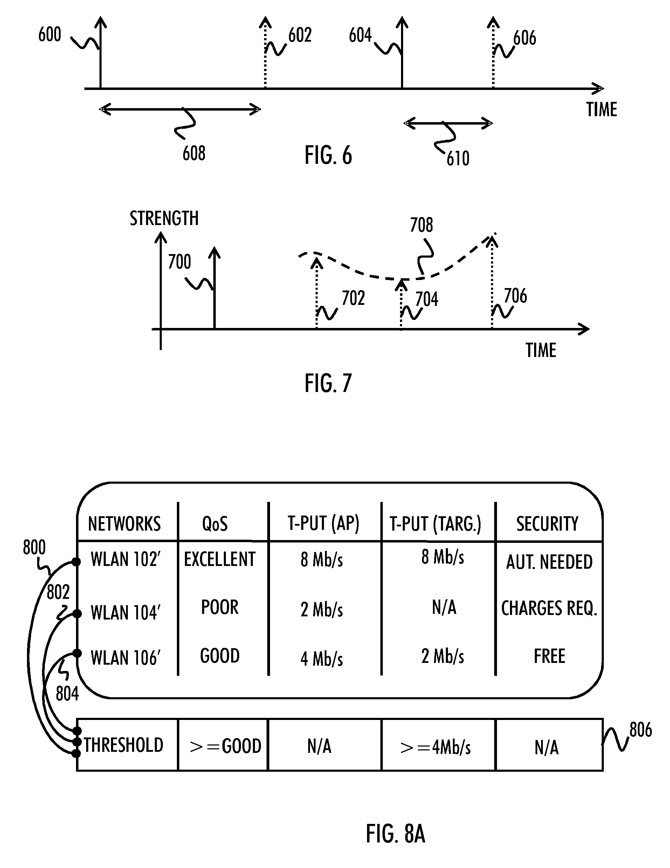

In an embodiment, the apparatus 100 determines the time interval between the transmission of the test signal and the reception of the response, thus allowing determination of the throughput of the connection to the predetermined target via the corresponding wireless network. Looking at Figure 6, where the transmissions of the test signal 400 are marked with solid arrows 600 and 604 and the receptions of the response 402 are marked with dotted arrows 602 and 606, the apparatus 100 may determine the corresponding time intervals 608 and 610. It may be understood, for example, that the test signal is first transmitted at point 600 to AP 102 and then, at point 604, to the AP 104. As the test signal 400 may require the predetermined target, such as the Internet 108, to provide the same amount of data in the response, the determined time interval 608 and 610 may indicate the throughput of the connection between the apparatus 100 and the Internet 108. For example, when the same amount of data has been acquired through the AP 104 from the Internet in a shorter time compared to the connection via the AP 102 (i.e. the time interval 610 is shorter than the time interval 608), it may be determined that the throughput of the connection via the AP 104 is higher. When a predetermined criterion for selecting the wireless network to connect to comprises the throughput (or speed) of the connection, then the device 100 may automatically connect to the WLAN 104' provided by the AP 104.

In an embodiment, a response 402 carries information regarding the operation of the corresponding AP 102, 104 or 106 as a function of time. The information may be, for example, the point of time when the AP forwarded the test signal to the target, or the point of time when the AP sent the response to the apparatus 100. The apparatus 100 may also be aware of the amount of data transmitted in the test signal or in the response. Based on such information, the apparatus is able to determine the throughput of the connection between the apparatus and the corresponding AP102, 104 or 106 based on the response. This may be advantageous when the predetermined criteria for selecting the wireless network 102', 104' or 106' comprises the speed or throughput of the connection between the AP and the apparatus 100.

In an embodiment, the apparatus 100 is caused to determine the received signal strength of the response 400, thus allowing determination of the quality of the connection between the apparatus 100 and the corresponding access point 102 to 106. This is shown in Figure 7, where the apparatus 100 first transmits the test signal 400 at point 700 and receives a response at point 702. The response has certain strength, as shown on the Y-axis of Figure 7, represented with the height of the arrow 702. The strength may be converted into the quality of service, as known by a skilled person. When a predetermined criterion for selecting the wireless network to connect to comprises the strength of the received signal (or the QoS), then the device 100 may automatically connect to the wireless network 102', 104' or 106' providing the highest signal strength.

In an embodiment, the apparatus 100 may receive at least two responses separated in time domain corresponding to the same AP. The plurality of responses may be due to a plurality of test signal sent or due to a single test signal, which carries information according to which plurality of responses separated in time domain are required. These responses are shown in Figure 7 with arrows having reference numerals 702 to 706. Based on the responses 702 to 706, the apparatus 100 may determine at least one characteristic of the at least two responses 702 to 706. In this example embodiment, the characteristic to be determined is the signal strength. This may be advantageous so that the apparatus 100 may determine, with respect to the corresponding access point, the at least one characteristic (such as the signal strength) as a function of time 708 based on the received plurality of responses. Obtaining such knowledge with respect to each AP 102 to 106, the apparatus 100 may better decide which AP provides the most reliable quality of service. It should be noted that the characteristic need not be the signal strength, but the time domain behavior of the time interval between the responses may be of issue as well, for example, or the fluctuation of an error rate of the connection, to mention only a few. Indeed, even without the time domain information, the error rate (bit error rate or frame error rate) may be one of the predetermined at least one criterion for selecting the wireless network 102' to 106' to connect to.

In an embodiment, a response carries information regarding the security properties of the wireless network provided by the corresponding access point. Such security properties may indicate whether or not a password or an authentication is needed, if connection to the predetermined target via the corresponding AP is to be established, for example. The security properties may also indicate whether or not the service provider requires charges for data transfer via the wireless network. Such information may be advantageous to obtain because when a predetermined criterion for selecting the wireless network to connect to comprises a requirement related to the security properties, then the device 100 may automatically connect to the wireless network 102', 104' or 106' which is free to use, for example.

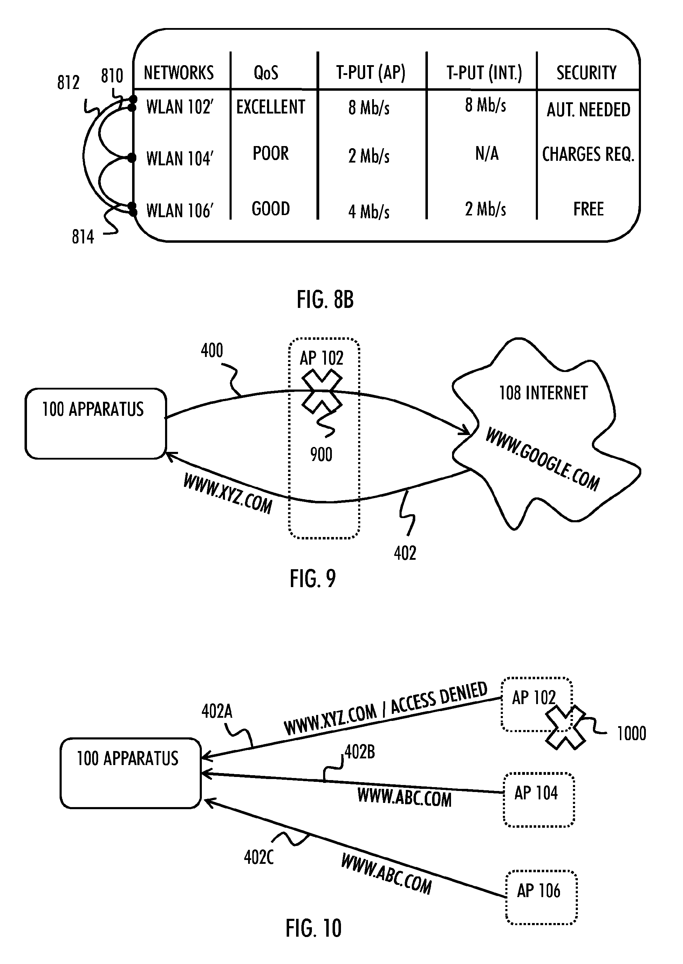

As shown above, the apparatus 100 may be aware of a plurality of characteristics related to the connections via each of the APs 102 to 106. This is shown in Figures 8A and 8B, where the wireless networks 102' to 106' are characterized with several parameters, including QoS, throughput between the AP and the apparatus, throughput between the target (such as the Internet) and the apparatus, and the security properties of the wireless network 102' to 106'. It may also be, as shown, that some of the APs are not successful in establishing connection to the target. In this case the AP 104 may have indicated that the connection to target failed. Therefore, the throughput (t-put) to target is not available (N/A), but other data may still be available.

In an embodiment, the apparatus 100 may compare at least one predetermined characteristic of each connection provided by the wireless networks to a predetermined threshold in order to find those wireless networks which are acceptable according to at least one predetermined criterion. Figure 8A shows this embodiment. The lines 800 to 804 depict how each connection via the corresponding wireless network 102' to 106' is compared to a predetermined at least one threshold 806. The thresholds in the embodiment of Figure 8A read that QoS needs to be *"at least good"* and the throughput to the target needs to be *"at least 4 Mb*/*s".* That is, in this embodiment, there are two predetermined criteria for finding the suitable WLANs. In this embodiment, no thresholds are set for the throughput to the AP and for the security issues. The predetermined threshold(s) 806 may be empirically derived, for example, or based on simulations. Based on the comparison, it may be decided that only WLAN 102' provided by the AP 102 fulfills the preset criteria as its QoS is excellent and the throughput to the target (such as to the internet or to another device) is 8 Mb/s. The QoS of WLAN 104' is poor, which is less than required, and the throughput to the target via the WLAN 106' is only 2 Mb/s. Therefore, the apparatus 100 may decide that the only suitable network is the WLAN 102' and, consequently, establish a connection via the WLAN 102'. In case there are several suitable/appropriate WLANs (i.e. wireless networks fulfilling the predetermined at least one criterion), the apparatus 100 may arbitrarily select one of them to connect to, or select the best one of the suitable wireless networks. Let us next look at how the best one may be selected.

In an embodiment, the apparatus is caused to compare the wireless networks to each other on the basis of the acquired information in order to find the most suitable one according to at least one predetermined criterion. Figure 8B shows this embodiment. Lines 810 to 814 show that the apparatus compares the at least one characteristic of the connections, not to a predetermined thresholds, but to each other. This may be advantageous in order to find the best one out of the three available WLANS 102' to 106'. When the at least one predetermined criterion is the QoS, the apparatus 100 may select the WLAN 102' to connect to. However, when the at least one predetermined criterion is free connectivity (i.e. related to the security characteristic), the apparatus 100 may select the WLAN 106' to connect to. The predetermined criterion may depend on the circumstances, it may be user defined, or it may be preconfigured in the apparatus 100.

It should be noted that there may be a plurality of predetermined criteria for selecting one of the wireless networks 102' to 106' to connect to. In such a case, there may be predetermined weighting coefficients for different criteria. For example, it may be very important that there are no charges or authentication required. This may cause the weighting coefficient for the criterion of unauthenticated connection to be determined as high compared to the other criteria, such as to the criterion related to the QoS and/or to the throughput. Therefore, even in a case where the at least one predetermined criterion for selecting the most suitable WLAN comprises all of the characteristics shown in Figure 8B, the apparatus 100 may select the WLAN 106' because it is the only one providing free connectivity and data transfer. It may be understood, for example, that the security related issues are weighted with 10 points, whereas the QoS and the throughput are each weighted with 2 points. Consequently, the WLAN 106' may be given 10 points, whereas the WLAN 102' is given 6 points. WLAN 104' may get zero points because it is not the best network in any criterion. Similar weighting coefficient solution may be applied for the embodiment of Figure 8A.

In an embodiment, as shown in Figure 9, the apparatus may generate the test signal 400 to comprise a request to connect to a predetermined server on the Internet 108, wherein the predetermined target is the Internet 108. The server may be for example the server associated with *"www.google.com".* As shown in Figure 9, the response 402 may carry information indicating the server which has been connected to in the Internet. Consequently, the apparatus 100 may determine whether or not the indicated server is the same as requested in the test signal 400. In this case the requested server corresponded to the *"www.google.com",* whereas the indicated server in the response 402 corresponds to *"www.xyz.com".* Therefore, upon detecting that the indicated server ("*www.xyz.com*") is not the same as requested (*"www.google.com*"), the apparatus 100 may decide not to consider the corresponding wireless network 102' for connection, as indicated by the cross 900 over the AP 102 providing the corresponding WLAN 102'. In such a case, the WLAN 102' may be removed from the lists of Figures 8A and 8B, for example.

In an embodiment, as shown in Figure 10, the apparatus 100 may detect that at least a predetermined percentage of responses 402B to 402C corresponding to wireless networks 104' to 106' comprise the same information. Upon detecting the above, the apparatus 100 may decide not to consider the other at least one wireless network 102' for connection. This is shown with a cross 1000 over the over the AP 102 providing the corresponding WLAN 102' in Figure 10. It may be, for example, that the apparatus 100 has generated the test signal 400 according to which a web page *"www.abc.com"* is expected to be returned in the responses 402A to 402C. However, the apparatus 100 may detect that, let us say, less than half of the responses 402A to 402C do not provide the expected data, but the others do provide. Consequently, the apparatus 100 may consider those WLANs which do not provide the common response as not suitable. These WLANs (in this case only WLAN 102) may provide for example *"Access denied"* information, or redirect to another, unwanted web page *"www.xyz.com".* It may be advantageous to detect that at least a predetermined percentage of responses 402B to 402C comprise the same, possibly expected information, as then the apparatus 100 may know that the request 400 was appropriate and not erroneous. The predetermined percentage may be for example empirically derived or an arbitrarily selected. It may be, for example, 80 percent of all responses. In the embodiment of Figure 10, the WLAN 102' may be removed from the lists of Figures 8A and 8B, as detected as non-suitable WLAN.

In an embodiment, the response 402 carries information regarding the amount of data transferred. Based on this knowledge, the apparatus 100 may determine the throughput corresponding to the connection associated with the response. However, the apparatus 100 may be able to determine the amount of data transferred even without the response 402 explicitly indicating it.

In an embodiment, the apparatus generates the test signal 400 to be transmitted to the Internet 108 via each wireless network 102' to 106'. After transmitting the test signal 400 to the Internet 108, the apparatus may start listening to the response 402 from at least one of the following: the Internet 108 and the corresponding access point 102, 104, or 106. The response 402 may be from either of them. As said, in an embodiment, the Internet 108 responds by transmitting for example data related to a requested web page, for example. However, in another embodiment, the AP 102 to 106 may deny the access to the Internet 108. This may happen for example, when the connection from the AP 102 to 106 to the Internet 108 does not exist or is lost. In any case, the apparatus 100 may acquire information about characteristics of the connections to the Internet 108 via each of the wireless networks 102' to 106' on the basis of the received responses 402 from the access points 102 to 106. When the response 402 carries data from the Internet 108 (from a specific server, for example), the apparatus may determine at least one characteristic of the connection to the Internet 108, such as the throughput. However, when the response 402 is from the AP 102 to 106, such as "Connection lost" or "Access denied", the apparatus 100 acquires knowledge that the connection to the Internet 108 is not working.

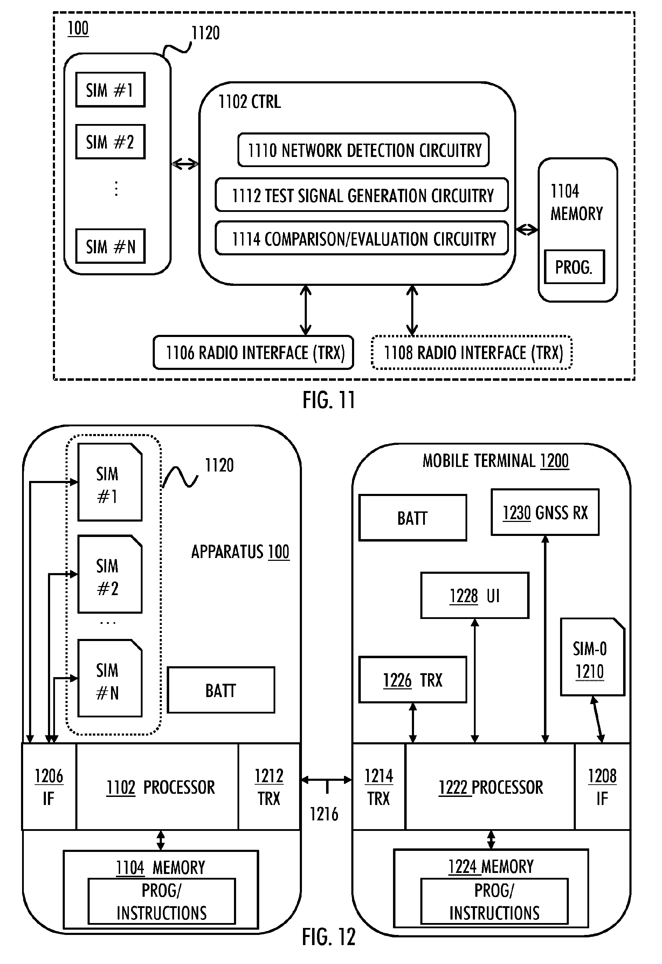

An embodiment, as shown in Figure 11, provides the apparatus 100 (also present in other Figures, such as in Figure 1) comprising a control circuitry (CTRL) 1102, such as at least one processor, and at least one memory 1104 including a computer program code (PROG), wherein the at least one memory 1104 and the computer program code (PROG), are configured, with the at least one processor 1102, to cause the apparatus 100 to carry out any one of the embodiments presented. It should be noted that Figure 11 shows only the elements and functional entities required for understanding a processing system of the apparatus 100. Other components have been omitted for reasons of simplicity. It is apparent to a person skilled in the art that the apparatus may also comprise other functions and structures.

The apparatus 100 may be, for example, a terminal device of a cellular communication system capable of wireless network access, e.g. a computer (PC), a laptop, a tabloid computer, a cellular phone, a communicator, a smart phone, a palm computer, or any other communication apparatus. Alternatively, the apparatus 100 is comprised in such a terminal device. Further, the apparatus 100 may be or comprise a module (to be attached to the apparatus 100) providing connectivity, such as a plug-in unit, an "USB dongle", or any other kind of unit. However, in an example embodiment, the apparatus 100 may also be interpreted as a circuitry implementing the required functionality within some suitable equipment.

As said, the apparatus 100 may comprise a control circuitry 1102, e.g. a chip, a processor, a micro controller, or a combination of such circuitries causing the apparatus to perform any of the embodiments of the invention. The control circuitry 1102 may be implemented with a separate digital signal processor provided with suitable software embedded on a computer readable medium, or with a separate logic circuit, such as an application specific integrated circuit (ASIC). The control circuitry 1102 may comprise an interface, such as computer port, for providing communication capabilities. The memory 1104 may store software (PROG) executable by the at least one control circuitry 1102.

The control circuitry 1102 may comprise a network detection circuitry 1110 for detecting the available wireless networks. As said, the detection may take place according to any methods and techniques known by a skilled person.

The control circuitry 1102 may comprise a test signal generation circuitry 1112 for generating the test signal 400. The test signal 400 may be generated as a connection-request, for example, so that an Internet connection to a certain server is pursued. Alternatively, the test signal 400 may be connection-request to a certain other device, possibly in the vicinity of the requesting apparatus 100. In general, the test signal 400 may be any signal that carries information which causes the connection to the predetermined target to be tested. In this light, it may be understood that the test signal 400 may, in an embodiment, carry information according to which the APs 102 to 106 are caused to indicate the characteristics of the connection to the predetermined target. The APs 102 to 106 may acquire the characteristics of the connection by applying a connection to the predetermined target, for example.

In an embodiment, the test signal is generated to comprise a ping-request to a certain server 110. The apparatus 100 may then detect the time interval between the ping-request and a ping-response, and use the information in the selection to the wireless network to connect to.

The control circuitry 1102 may comprise a comparison & evaluation circuitry 1114 for evaluating the available wireless networks 102' to 106' based on the acquired information obtained. The information may be obtained based on the responses 402 from each wireless network 102' to 106'. The circuitry 1114 may also compare the available networks 102' to 106' to a predetermined at least one thresholds, as shown in Figure 8A and/or compare the available networks 102' to 106' with each other. The evaluation & comparison process may result in the determination of suitable networks and/or in the determination of the best, i.e. most suitable network.

The apparatus 100 may also comprise a user interface comprising, for example, at least one keypad, a microphone, a touch display, a display, a speaker, etc. The user interface may be used to control the apparatus by the user. However, in another embodiment, there is no user interface in the apparatus 100. I.e. the end user may not be able to interact with the apparatus 100 by means of a touch display or mouse, for example. In this case, a skilled person may appreciate the automatic determination and selection of the best wireless network to connect to.

The apparatus 100 may further comprise radio interface component unit (TRX) 1106 providing the apparatus with radio communication capabilities with a radio access network, and with the wireless networks 102' to 106'. The radio interface components 1106 may comprise standard well-known components such as amplifier, filter, frequency-converter, (de)modulator, and encoder/decoder circuitries and one or more antennas.

Advantageously, the apparatus 100 may comprise at least one additional radio interface component unit (TRX) 1108 providing the apparatus with radio communication capabilities with a radio access network, and with the wireless networks 102' to 106'. Having several TRXs 1106 and 1108 may allow the apparatus 100 to connect to several networks simultaneously and, thus, decrease the time spent on the detection of the best of the available wireless networks 102' to 106'.

As said, the apparatus 100 may comprise the memory 1104 connected to the control circuitry 1102. However, memory may also be integrated to the control circuitry 1102 and, thus, no memory 1104 may be required. The memory 1104 may be implemented using any suitable data storage technology, such as semiconductor based memory devices, flash memory, magnetic memory devices and systems, optical memory devices and systems, fixed memory and removable memory. The memory 1104 may be for storing data related to the predetermined at least one criterion for selecting the suitable networks or the most suitable network, data related to the predetermined at least one thresholds, data related to the predetermined target (such as another device), etc.

In an embodiment, the apparatus 100 comprises multiple subscriber identity modules (SIM), as shown with reference numeral 1120 in Figure 11. The SIM is a logical entity on the physical card storing user subscriber information, authentication information, text messages, and phone book contacts, for example. More specifically, the data relating to the SIMs may include, for example, a unique serial number of the SIM card, internationally unique number of the subscriber (International Mobile Subscriber Identity, IMSI), security authentication and ciphering information for the subscriber, temporary information related to the local network, a list of the services the subscriber has access to, an operator-specific emergency number, two passwords (such as a personal identification number, PIN, for ordinary use, and a PIN unlock code, PUK, for PIN unlocking). Further information may be found in the GSM Technical Specification 11.11.

Owing to the information of the SIM, the device associated with the SIM may connect to cellular communication network, such as to the 2G, 3G or to the LTE networks as described below, for example. The cellular communication network may apply communication services according to at least one of the following radio access technologies (RATs): Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), the long term evolution (LTE), and/or LTE-A. Besides being called the SIM, also other names and abbreviations may be used to refer to subscriptions. USIM (Universal Subscriber Identity Module) is an application for UMTS running on an ICC (Integrated Circuit Card).

As said, the apparatus 100 may comprise a set of SIMs #1...#N. The number of the subscriber identity modules may vary according to the circumstances, but there are at least two subscriber identity modules. One subscriber identity module may be a default subscriber identity module used normally (in user's home location or in a network where he/she has the coverage of the default home network, for example). Even a virtual subscriber identity module is feasible: it is a mobile phone number provided by a mobile network operator that does not require a SIM card to connect phone calls to the user's mobile terminal. In such a scenario, the at least one memory 1104 of the apparatus 100 may be used to store subscriber data of the virtual subscriber identity module as required.

As known by a skilled person, different public land mobile networks (PLMNs) are available in different locations, such as in different countries. One of the PLMNs may be provided by the home operator. This may be the typical home PLMN the apparatus first (tries to) select. However, for example, when travelling, the home PLMN may not be available and the apparatus 100 needs to connect to another network. Roaming is the ability for a cellular customer to automatically make and receive voice calls, send and receive data, or access other services when travelling outside the geographical coverage area of the home network, by means of using a visited network. Roaming is technically supported by mobility management, authentication and billing procedures.

Owing to the set of SIMs #1 to #N, the apparatus 100 may have the ability to apply a current home network when locating outside the coverage area of the typical or usual home network. This is because the plurality of SIMs may be related to different networks (PLMNs). Therefore, in one location a first SIM capable of connecting to a home network of the first SIM may be applied. In another location, a second SIM capable of connecting to a home network of the second SIM may be applied. This may simplify making phone calls and data transfers abroad, for example. Costs of making such data transfers abroad may be reduces as well.

It should be noted that some wireless networks 102' to 106' may require information related to the SIM of the apparatus 100 before allowing a connection to be established. Some networks 102' to 106' may require the SIM to be provided by the same, or related, operator as the wireless network is. Therefore, the existence of a certain at least one SIM may be one of the predetermined at least one criterion for evaluation and selection of the wireless network to connect to. For example, it may be that those networks, which are provided by an operator whose SIM is not in the apparatus 100, may be removed from the list of suitable networks. Therefore, it may be advantageous to have the proposed solution performed in an apparatus equipped with multiple SIMs so that a suitable wireless network may be selected immediately and automatically.

Regarding the embodiment in which multiple SIMs are present, the apparatus 100 may be interoperating with another end user device, such as a mobile phone. Figure 12 illustrates an example embodiment wherein the apparatus 100 is interoperating with the mobile terminal 1200. Also Figure 1 illustrates this embodiment. In Figure 1, a simplified (for clarity reasons) mobile terminal 1200 is presented with dotted lines and double headed arrow illustrates that the mobile terminal 1200 may co-operate with the apparatus 100 via one of the WLANs 102' to 106'. The dotted lines denote that the presence of the mobile terminal 1200 is not mandatory, but rather one possible embodiment. Let us now look closer to Figure 12.

As said, the apparatus 100 comprises the set of the subscriber identity modules 1120, and the at least one processor 1102 and at least one memory 1104 with the instructions/program (PROG). The apparatus 100 may or may not comprise a battery, depending on the power requirements of the apparatus 100 and the possibility to obtain electric energy from an external source such as the mobile terminal 1200.

As shown, the apparatus 100 may further comprise an interface 1206 to the subscriber identity modules. There may also be another interface (IF) 1208 to the subscriber identity module 1210 possibly located in the mobile terminal 1200. The SIM 1210 of the mobile terminal 1200 may be the SIM corresponding to the typical or usual home PLMN, whereas the SIMs in the apparatus 100 may correspond to other PLMNs. This may be advantageous so that one of the SIMs in the apparatus 100 may be selected in order to enable the mobile terminal to communicate in a home network, instead of roaming, even when traveling.

For example, a user may carry both of the devices, the apparatus 100 and the mobile terminal 1200 (or these functional entities may be integrated in the same physical device). As the mobile terminal 1200 makes a phone call, data transfer, etc., when locating outside of the home network of the SIM 1210 of the mobile terminal, one of the SIMs in the apparatus 100 may be applied for the purposes of the cellular communication of the mobile terminal 1200. The applied SIM may be the one that allows the mobile terminal 1200 to communicate in the home network of the selected SIM, instead of roaming. This may significantly decrease the costs of such phone call or data transfer.

Both the mobile terminal 1210 and the apparatus 100 may comprise a wireless communication protocol interface 1212, 1214 enabling two-way communication 1216 between the mobile terminal 1200 and the apparatus 100. In an example embodiment, the interface 1212, 1214 is implemented as a serial or parallel communication bus, hardware line, an USB (Universal Serial Bus) cable with appropriate connectors, a SIM bus according to ISO/IEC 7816-3, a wireless Bluetooth link, , a serial bus such as UART (Universal Asynchronous Receiver/Transmitter), 12C (Inter-Integrated Circuit) or SPI (System Packet Interface).

However, in an embodiment, the interface 1212, 1214 is implemented as a wireless network (such as WLAN) link, a wireless Wi-Fi (Wireless Fidelity) link. It may be, for example, that the mobile terminal 1200 is the predetermined target device to which the AP 102 to 106 is caused to apply the wireless network connection to. Thus, in an embodiment, the selection of the wireless network 102' to 106' may refer to the selection of the wireless network which is to be applied at least in the communication 1216 between the mobile terminal 1200 and the apparatus 100.

In an example embodiment, the mobile terminal 1200 may be a mobile phone comprising the default subscriber identity module 1210, a transceiver (TRX) 1226 capable of connecting the mobile terminal to a wireless cellular communication system, a user interface 1228, a battery, at least one control circuitry (such as a processor) 1222 and at least one memory 1224 with instructions/program. The instructions, when executed by the processor 1222 may cause the mobile terminal 1200 to perform functionalities related to performing data transfer, phone calls, etc. The mobile terminal 1200 may also be caused to interact with the apparatus 100 based on the executed instructions, such as cause the mobile terminal 1200 to communicate with the apparatus 100 via the WLAN 102' to 106'.

The user interface 1228 may comprise, for example, at least one keypad, a microphone, a touch display, a display, a speaker, etc. The user interface may be used to control the apparatus by the user. In the example embodiment of Figure 12, the apparatus 100 does not comprise a user interface of its own, but the user interaction, if any, may be performed through the user interface 1228 of the mobile terminal 1200. Therefore, it may be advantageous to have the proposed solution performed in an apparatus equipped with multiple SIMs so that a suitable wireless network may be selected immediately and automatically, without user interaction. However, in another example embodiment, the apparatus 100 may comprise a user interface.

Furthermore, the mobile terminal 1200 may comprise a positioning receiver 1230 receiving external location information, which may be utilized to generate location of the mobile terminal 1200. The positioning receiver 1230 may be a receiver of a global navigation satellite system (GNSS). Such a system may be the Global Positioning System (GPS), the Global Navigation Satellite System (GLONASS), the Galileo Positioning System (Galileo), the Beidou Navigation System, The Quasi-Zenith Satellite System (QZSS), or the Indian Regional Navigational Satellite System (IRNSS), for example. Besides global navigation satellites, the positioning receiver 1230 may also determine its location by utilizing other known positioning techniques. It is well known that by receiving radio signals from several different base stations, a mobile phone may determine its location, for example.

The instructions, when executed, cause the apparatus 100 to obtain the data relating to the subscriber identity modules within the apparatus 100 and to obtain the data relating to the mobile terminal 1200 via connection 1216. The data of the mobile terminal may comprise, for example, the location information of the mobile terminal 1200, so that the apparatus 100 may select which SIM to apply in order to communicate through the current home network without roaming. Regarding the selection of the SIM, the reader is referred to previous European patent applications by the Applicant, the applications having application numbers 12151906.0, and 12151908.6.

In the example embodiment of Figure 12, the apparatus 100 functionality may be implemented in the apparatus 100 such that the instructions are run in the at least one processor 1102 of the apparatus 100. However, also such an example embodiment is feasible wherein a part of the apparatus 100 functionality is implemented in the mobile terminal 1200 such that a part of the instructions are also run in the at least one processor 1222 of the mobile terminal 1200. It should be noted that the apparatus 100 may also be comprised within the mobile phone 1200, and thus the functionalities of the apparatus 100 and of the mobile phone 1200 may be performed by the same processor (i.e. control circuitry), for example. In another embodiment, the apparatus 100 is a USB (Universal Serial Bus) modem. Furthermore, the USB modem may comprise a USB interface capable of being coupled through a USB cable and appropriate connectors to a USB interface of the mobile terminal 1200.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Thus, according to an embodiment, the apparatus comprises processing means configure to carry out embodiments of any of the Figures 1 to 12. In an embodiment, the at least one processor 1102, the memory 1104, and the computer program code form an embodiment of processing means for carrying out the embodiments of the invention.

Embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (100) for performing an automatic selection procedure of a wireless network (102' to 106'), comprising:
at least one processor and at least one memory including a computer program code, wherein the at least one memory and the computer program code are configured to, with the at least one processor, cause the apparatus (100) at least to:
detect at least two wireless networks (102' to 106') available at the location of the apparatus (100), wherein each wireless network (102' to 106') is provided by a different access point (102 to 106);
generate a test signal (400) to be transmitted to each access point (102 to 106), wherein the test signal (400) is arranged to cause the receiving access point (102 to 106) to apply a connection to a predetermined target (108, 410);
cause the transmission of the test signal (400) to each access point (102 to 106) and reception of a response (402) from the corresponding access point (102 to 106);
acquire information about the connections via the wireless networks (102' to 106') on the basis of the received responses (402); and
automatically select the wireless network (102' to 106') to connect to among the at least two wireless networks (102' to 106') on the basis of the acquired information and at least one predetermined criterion.

2. The apparatus of claim 1, wherein the apparatus is further caused to:
determine the time interval between the transmission of the test signal (400) and the reception of the response (402), thus allowing determination of the throughput of the connection to the predetermined target (108, 410) via the corresponding wireless network (102' to 106').

3. The apparatus of any of claims 1 to 2, wherein a response (402) carries information regarding the operation of the corresponding access point (102 to 106) as a function of time; and the apparatus (100) is further caused to:
determine the throughput of the connection between the apparatus (100) and the access point (102 to 106) based on the response (402).

4. The apparatus of any of claims 1 to 3, wherein the apparatus is further caused to:
determine the received signal strength of the response (402), thus allowing determination of the quality of the connection between the apparatus (100) and the corresponding access point (102 to 106).

5. The apparatus of any of claims 1 to 4, wherein a response (402) carries information regarding the security properties of the corresponding wireless network (102' to 106').

6. The apparatus of any of claims 1 to 5, wherein the apparatus is further caused to:
cause reception of at least two responses (402) separated in time domain corresponding to the same access point (102 to 106);
determine at least one characteristic of the at least two responses (402), and
determine, with respect to the corresponding access point (102 to 106), the at least one characteristic as a function of time (708) based on the received at least two responses (402).

7. The apparatus of any of claims 1 to 6, wherein the apparatus is further caused to:
generate the test signal (400) to comprise a request to connect to a predetermined server on the Internet, wherein the predetermined target is the Internet(108).

8. The apparatus of claim 7, wherein a response (402) carries information indicating the server (110) which has been connected to in the Internet (108), and the apparatus (100) is further caused to:
determine whether or not the indicated server (110) is the same as requested in the test signal (400); and
upon detecting that the indicated server (110) is not the same as requested, decide not to consider the corresponding wireless network (102' to 106') for connection.

9. The apparatus of any of claims 1 to 8, wherein the apparatus is further caused to:
generate the test signal (400) to comprise a request to connect to a predetermined device (410, 1200), wherein the predetermined target is the device (410, 1200).

10. The apparatus of any of claims 1 to 9, wherein the apparatus is further caused to:
upon detecting that a predetermined percentage of responses (402) corresponding to certain wireless networks (102' to 106') comprise the same information, decide not to consider the other at least one wireless network (102' to 106') for connection.

11. The apparatus of any of claims 1 to 10, wherein the apparatus is further caused to:
compare at least one predetermined characteristic of each connection to a predetermined threshold (806) in order to find those wireless networks (102' to 106') which are acceptable according to at least one predetermined criterion.

12. The apparatus of any of claims 1 to 11, wherein the apparatus is further caused to:
compare the wireless networks (102' to 106') with each other on the basis of the acquired information in order to find the most suitable one according to at least one predetermined criterion.

13. The apparatus of any of claims 1 to 12, wherein the apparatus (100) comprises multiple subscriber identity modules, SIMs, and one of the predetermined at least one criterion for selecting the wireless network (102' to 106') is related to the existence of a predetermined at least one SIM in the apparatus (100), and
wherein the selected wireless network (102' to 106') is to be used at least for connecting the apparatus (100) to a mobile phone (1200) as the predetermined target, and the selected wireless network is used in order to enable the mobile terminal (1200) to access a cellular communication network via one of the plurality of SIMs in the apparatus (100).

14. A method for performing an automatic selection procedure of a wireless network (102' to 106'), comprising:
detecting at least two wireless networks (102' to 106') available at a location, wherein each wireless network (102' to 106') is provided by a different access point (102 to 106);
generating a test signal (400) to be transmitted to each access point (102 to 106), wherein the test signal (400) is arranged to cause the receiving access point (102 to 106) to apply a connection to a predetermined target (108,410);
causing a transmission of the test signal (400) to each access point (102 to 106) and reception of a response (402) from the corresponding access point (102 to 106);
acquiring information about the connections via the wireless networks (102' to 106') on the basis of the received responses (402); and
automatically selecting the wireless network (102' to 106') to connect to among the at least two wireless networks (102' to 106') on the basis of the acquired information and at least one predetermined criterion.

15. A computer program product embodied on a distribution medium readable by a computer and comprising program instructions which, when loaded into an apparatus (100), execute the method according to claim 14.
